Europäisches Patentamt

European Patent Office

Office européen des brevets

(11) Publication number: **0 236 549**
**B1**

(12) **EUROPEAN PATENT SPECIFICATION**

(45) Date of publication of patent specification: **23.05.90**

(51) Int. Cl.⁵: **A 47 J 31/24,** A 47 J 31/36, A 47 J 31/54

(21) Application number: **86114394.9**

(22) Date of filing: **17.10.86**

(54) Assembly for making espresso coffee and other hot beverages.

(30) Priority: **10.03.86 IT 5309186 u**

(43) Date of publication of application:
**16.09.87 Bulletin 87/38**

(45) Publication of the grant of the patent:
**23.05.90 Bulletin 90/21**

(84) Designated Contracting States:
**AT BE CH DE ES FR GB GR IT LI LU NL SE**

(56) References cited:
**EP-A-0 153 549**
**EP-A-0 201 656**
**AT-A- 188 457**
**DE-A-1 454 231**
**FR-A-1 066 519**
**FR-A-2 483 762**
**FR-A-2 544 185**
**US-A-3 122 987**

(73) Proprietor: **BREVETTI GAGGIA S.p.A.**
**I-20087 Robecco sul Naviglio (IT)**

(72) Inventor: **Pandolfi, Alberto**
**Via S. Giacomo 2**
**Milano (IT)**

(74) Representative: **Klausner, Erich et al**
**c/o Ufficio Internazionale Brevetti Ing. C. Gregorj**
**S.p.A. Via Dogana 1**
**I-20123 Milano (IT)**

Courier Press, Leamington Spa, England.

## Description

This patent relates to assemblies for making Espresso Coffee and other hot beverages for use in public coffee-houses; the assemblies are of the type which also comprises means for the separate production and distribution of hot water and steam for other uses, for example hot water for the preparation of, tea and similar drinks and steam for heating other drinks such as milk and white coffee.

In the known assemblies of this type, a boiler containing a heat exchanger is used, said boiler being fed under pressure by means of a water pump for production of the espresso coffee.

The hot water and the steam for other uses are instead drawn directly from the boiler and fed to associated conveying tubes provided with control valves.

Depending on use requirements, these assemblies are provided with one or more devices or spouts of distribution for the espresso coffee (generally from 1 to 4) and with a corresponding number or different distributing tubes for the hot water and steam.

The capacity of the boiler must however be determined as a function of the number of coffee distributors, and this makes complicated and expensive the fabrication of the different types of assemblies, necessary to meet market requirements, in that it involves also the use of interconnecting tubes between the various parts of the assembly which differ depending on the assembly type.

The aim of the present invention is to obviate said drawbacks, and its object is an assembly for making expresso coffee or other hot beverages of the type above specified the main feature of which is defined in claim 1 and lies in the fact that it comprises means for the production and distribution of hot water and steam independently from the production of the espresso coffee itself.

Further characteristics and advantages of the invention will be clear from the following description having reference to the annexed drawings, which are given by way of example only, and are not limitative.

In the drawings:

Figs. 1 and 2 are transversal cross sections respectively showing a group for the production of the espresso coffee and a group for the production of hot water and steam for other uses.

Fig. 3 is a view of an assembly comprising the combination of the groups shown in Figures 1 and 2.

Fig. 4 is an exploded view of fig. 3 and

Figs. 5 and 6 are transversal cross sections taken respectively on lines VI-VI and VII-VII of fig. 3.

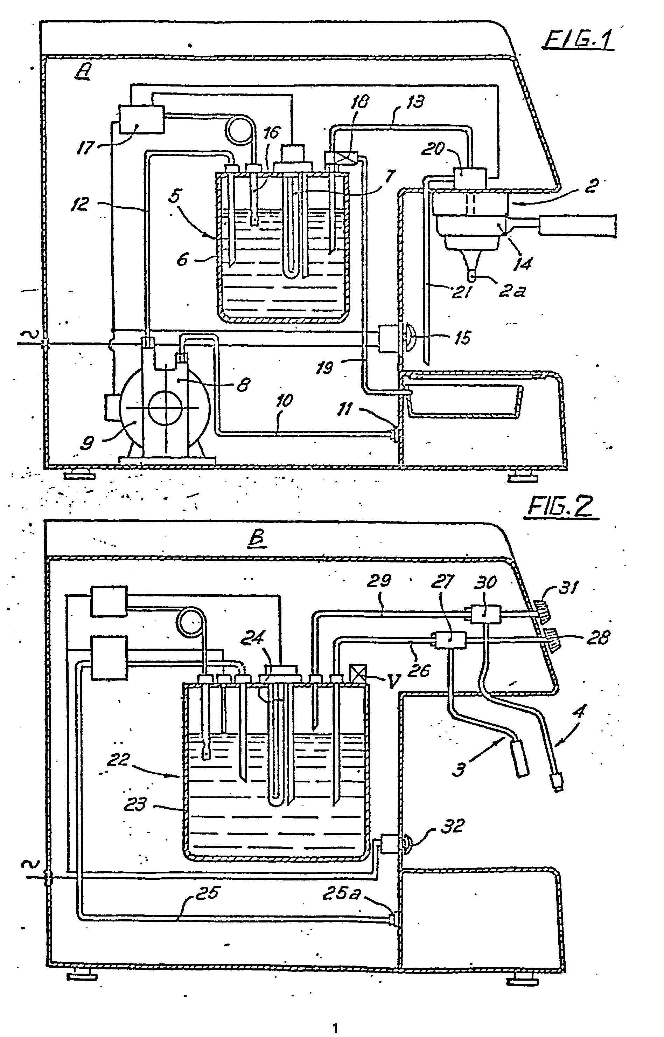

With reference to the example illustrated in Figs. 1 and 2 the assembly 1 comprises an espresso coffee group A for the production and delivery of the espresso coffee, and a hot beverage group B for the production of hot water and steam. The espresso coffee group A is provided with an espresso coffee dispensing device 2 with two coffee spout orifices 2a.

Said autonomous group A includes a hot water generator 5 comprising a kettle 6 and an electric heating resistor 7.

Hot water generator 5 is fed with cold water by a pump 8, driven by an electric motor 9 and provided with a suction tube 10 with relevant fitting 11 for connection to the water distributing network.

The delivery tube of pump 8 is identified by 12; this tube penetrates in closed kettle 6; a tube 13 connects the kettle 6 with the espresso coffee dispensing device 2.

Said device 2 comprises a filter holder 14 apt to be filled with ground coffee.

An electric switch 15 controls the supply of electric power to water heating resistor 7 and to electric motor 9 driving pump 8.

A thermostat 16 dips in kettle 6 and actuates a switch 17 inserted in the electric circuit which supplies power to resistor 7.

A discharge valve 18 is provided for discharging for the overpressure of the electric generator 5 for espresso coffee through overpressure discharge tube 19.

A solenoid valve 20 is provided to release the pressure of coffee dispensing assembly 2 by placing it in communication with the atmosphere via discharge tube 21.

In fig. 3, adjacent to previously mentioned group A here is arranged group B apt to provide the delivery of hot water and steam. The hot beverage group B comprises a tube 3 to dispense hot water and a tube 4 to dispense steam.

The group B comprises a hot water and steam generator 22 including a closed kettle 23 having a capacity greater than that of kettle 6 of group A and an electric resistor 24 fitted in said kettle 23.

A tube 25 is connected, at one end, with a fitting 25a for connection to a water distribution network and at the other end, with kettle 23 to feed cold water to kettle 23 which is provided with a safety valve V.

A tube 26 connects the zone of kettle 23 filled by the water with hot water dispensing tube 3. A shut off valve 27 is fitted into tube 26, said safety valve being controlled by acting on a knob 28.

A tube 29 connects the steam zone in kettle 23 with steam dispensing tube 4. A shut off valve 30 actuated by knob 31 is fitted in tube 29.

From the above description it is clear that hot water generator 5 used for the production of the espresso coffee is independent from the hot water and steam generator 22 serving other uses.

Moreover, each one of said generator are part of fully autonomous group; as a result of this several assemblies can be provided, each having one or more coffee dispensing devices by virtue of a corresponding number of autonomous groups A.

Similary, by using one or more autonomous groups B in the same assembly it is possible to equip this with a corresponding number of hot water and steam dispensing tubes depending on requirements of the assembly itself.

Obviously the length of the frame supporting autonomous groups A and B will have to be proportional to the number of groups, and this also applies to the chassis enveloping the supporting framework.

Each of said autonomous groups A and B may be contained in a corresponding modular unit of the machine in order to simplify further the production of assemblies equipped with different numbers of coffee dispensing devices.

In Fig. 3, number 1a identifies an assembly consisting of a modular unit 37, housing autonomous group A of the type shown in Fig. 1, and a modular unit 38 housing an autonomous group B as described with reference to Fig. 2.

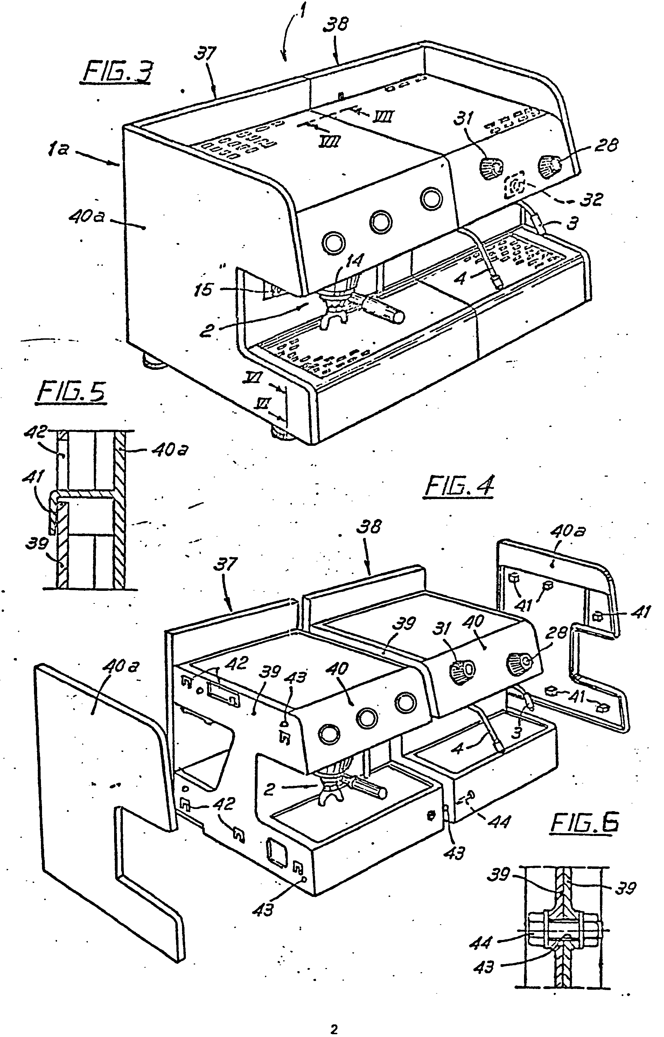

As shown in Fig. 4, each one of modular units 37, 38, comprise a supporting structure 39 for the components of the respective autonomous groups and a body 40 enveloping said supporting structure.

Number 40a identifies the sides of the body, each consisting of a panel 40a, provided, on its inside surface with hooks 41 which engage in corresponding apertures 42 in the end elements of supporting structure 39.

The above connection by means of hooks of body sides 40a makes possible disassembly of said sides for connection between supporting structures 39 of two adjacent modular units 37 and 38.

To provide such connection each one of the end elements of supporting structure 39 of each modular unit 37, 38 is provided with holes 43 for connecting bolts 44.

From the above description it is evident that the modular units 37, 38 make it possible to realize assemblies provided with one, two, three or four devices 2 for dispensing coffee and a corresponding variable number of tubes 3 for dispensing hot water and tubes 4 for dispensing steam, depending on requirements.

## Claims

1. An assembly for making espresso coffee and other hot beverages characterized in that it comprises at least one independent group (A) for producing and dispensing espresso coffee comprising means for heating water and at least one independent group (B) for producing and dispensing hot water and steam for the preparation of other hot beverages and for other uses, said groups being apt to be coupled to each other by mechanical coupling means (41, 42).

2. An assembly according to above claim 1 characterized in that:
said at least one group (A) comprises a hot water generator (5) having a closed kettle (6) and heating means (7) associated with said kettle; an electrically driven pump (8, 9) to feed cold water under pressure from a cold water source, to said kettle (6); a coffee dispensing device (2) including a filter holder (14) apt to contain a dose of ground coffee and a tube (13) connecting said kettle (6) with said coffee dispensing device (2) to feed hot water under pressure to said coffee dispensing device (2) when said electrically driven pump (8-9) is operated;
said at least one group (A) comprises a hot water and steam generator (22) having a closed kettle (23) and heating means (24) associated with said kettle; a supply conduit (25) to feed cold water to said kettle from a water distribution network; a first delivery conduit (26) connecting, through a shut off valve (27) the zone filled by the water in said kettle (23) with a tube (3) to dispense the hot water and a second delivery conduit (28) connecting, via a second shut-off valve (29), the steam zone in said kettle (23) with a steam dispensing tube (14).

3. An assembly according to claim 2, characterized in that each one of said groups (A-B) is housed in a corresponding modular unit (37-38) said modular units (37-38) being interconnectable one adjacent to another, so as to realize assemblies having one or more groups (A) for production and dispensing of espresso coffee and one or more groups (B) for the production and dispensing of hot water and steam.

4. An assembly according to claim 3, characterized in that each modular unit (37, 38) comprises a supporting structure which supports the components of the respective autonomous groups (A, B) and a body (40) which envelops said supporting structure, sides (40a) of said body (40) being mounted in order to permit an easy disassembly from the supporting structure (39) so as to consent inter-connection between said supporting structures (39) of two adjacent modular units (37, 38).

5. An assembly according to claim 4, characterized in that each of the two sides (40a) of the body of each modular units (37, 38) consists of a panel provided on its inside surface with hook shaped projections (41) which engage in corresponding slots (42) in the sidewalls of said supporting structures (39) of the modular unit.

6. An assembly according to claim 4, characterized in that each one of the sidewalls of supporting structure (39) of each modular unit (37, 38) is provided with holes (43) to permit connection by means of bolts (44) between supporting structures (39) of two modular units (38, 39) adjacent to each other.

## Patentansprüche

1. Baugruppe zur Herstellung von Espressokaffee und anderen heißen Getränken, dadurch gekennzeichnet, daß sie zumindest eine unabhängige Gruppe (A) zur Erzeugung und Ausgabe von Espressokaffee, mit Mitteln zum Erhitzen von Wasser, und zumindest eine unabhängige Gruppe (B) zur Erzeugung und Ausgabe von Heißwasser und Dampf für die Bereitung von anderen heißen Getränken und für andere Zwecke aufweist, wobei die Gruppen geeignet sind, durch mechanische Kupplungsmittel (41, 42) miteinander gekuppelt zu werden.

2. Baugruppe nach Anspruch 1, dadurch gekennzeichnet, daß die zumindest eine Gruppe (A) einen Heißwassererzeuger (5) mit einem geschlossenen Kessel (6) und mit diesem Kessel verbundene Heizmittel (7); eine elektrisch angetriebene Pumpe (8, 9) zur Zufuhr von Kaltwasser unter Druck von einer Kaltwasserquelle zu diesem Kessel (6); eine Kaffee-Ausgabeeinrichtung (2) mit einem zur Aufnahme einer portion gemahlenen Kaffees geeigneten Filterhalter (14) und ein Rohr (13) aufweist, welches den Kessel (6) mit der Kaffee-Ausgabeeinrichtung (2) verbindet, um Heißwasser unter Druck der Kaffee-Ausgabeeinrichtung (2) zuzuführen, wenn die elektrisch angetriebene Pumpe (8, 9) betrieben wird;

die zumindest eine Gruppe (B) einen Heißwasser- und Dampferzeuger (22) mit einem geschlossenen Kessel (23) und mit mit diesem Kessel verbundenen Heizmitteln (24); eine Zufuhrleitung (25) zum Zuführen von Kaltwasser von einem Wasserverteilungssystem zu diesem Kessel; eine erste Lieferleitung (26), welche über ein Absperrventil (27) die wassergefüllte Zone in diesem Kessel (23) mit einem Rohr (3) zur Ausgabe des Heißwassers verbindet, und eine zweite Lieferleitung (28) aufweist, welche über ein zweites Absperrventil (29) die Dampfzone in diesem Kessel (23) mit einem Dampfausgaberohr (14) verbindet.

3. Baugruppe nach Anspruch 2, dadurch gekennzeichnet, daß jede der genannten Gruppen (A, B) in einer entsprechenden modularen Einheit (37, 38) untergebracht ist, welche modulare Einheiten (37, 38) einander benachbart verbindbar sind, um Baueinheiten zu bilden, welche eine oder mehrere Gruppen (A) zur Erzeugung und Ausgabe von Espressokaffee und eine oder mehrere Gruppen (B) zur Erzeugung und Ausgabe von Heißwasser und Dampf aufweisen.

4. Baugruppe nach Anspruch 3, dadurch gekennzeichnet, daß jede modulare Einheit (37, 38) eine Tragstruktur, welche die Komponenten der betreffenden selbsttätigen Gruppe (A, B) trägt, und einen Körper (40) aufweist, der diese Tragstruktur umhüllt, wobei Seiten (40a) dieses Körpers (40) so angebracht sind, daß ein leichtes Abnehmen von der Tragstruktur (39) möglich ist, um eine Verbindung zwischen den Tragstrukturen (39) zweier benachbarter modularer Einheiten (37, 38) zu ermöglichen.

5. Baugruppe nach Anspruch 4, dadurch gekennzeichnet, daß jede der beiden Seiten (40a) des Körpers einer jeden modularen Einheit (37, 38) aus einer Platte besteht, die an ihrer Innenseitenoberfläche mit hakenförmigen Fortsätzen (41) versehen ist, welche in korrespondierende Schlitze (42) in den Seitenwänden der Tragstrukturen (39) der modularen Einheit eingreifen.

6. Baugruppe nach Anspruch 4, dadurch gekennzeichnet, daß jede der Seitenwände der Tragstruktur (39) jeder modularen Einheit (37, 38) mit Öffnungen (43) versehen ist, um die Verbindung zwischen den Tragstrukturen (39) von zwei einander benachbarten modularen Einheiten (38, 39) mittels Schrauben (44) zu ermöglichen.

## Revendications

1. Ensemble pour la préparation de café express et d'autres boissons chaudes, caractérisé en ce qu'il comprend au moins un groupe indépendant (A) pour la préparation et le débit de café express comprenant un moyen pour chauffer de l'eau, et au moins un groupe indépendant (B) pour la production et le débit d'eau chaude et de vapeur d'eau utilisées pour la préparation d'autres boissons chaudes ainsi qu'à d'autres usages, ces groupes pouvant être assemblés par des moyens d'assemblage mécaniques (41, 42).

2. Ensemble suivant la revendication 1, caractérisé en ce que:

le au moins un groupe (A) comprend un générateur d'eau chaude (5) comportant une chaudière close (6) et un moyen de chauffage (7) associé à la chaudière; une pompe entraînée par moteur électrique (8, 9) destinée à introduire de l'eau froide sous pression à partir d'une source d'eau froide dans la chaudière (6); un dispositif de débit (2) pour le café comprenant un support filtrant (4) propre à contenir une dose de café moulu et un tube (13) raccordant la chaudière (6) au dispositif de débit (2) pour le café afin de fournir de l'eau chaude sous pression au dispositif de débit (2) lorsque la pompe à moteur électrique (8, 9) est actionnée;

ledit au moins un groupe (B) comprend un générateur d'eau chaude et de vapeur d'eau (22) comportant une chaudière close (23) et un moyen de chauffage (24) associé à la chaudière; une conduite d'alimentation (25) pour introduire de l'eau froide dans la chaudière à partir d'un réseau de distribution d'eau; une première conduite de débit (26) raccordant, par l'intermédiaire d'une valve d'arrêt (27), la zone remplie d'eau dans la chaudière (23) à un tube (3) pour débiter l'eau chaude et une seconde conduite de débit (28) raccordant, par l'intermédiaire d'une seconde valve d'arrêt (29), la zone de vapeur d'eau dans la chaudière (23) à un tube de débit de vapeur (14).

3. Ensemble suivant la revendication 2, caractérisé en ce que chacun des groupes (A, B) est logé dans une unité modulaire correspondante (37, 38), les unités modulaires (37, 38) pouvant être reliées l'une à proximité de l'autre de manière à réaliser des ensembles comportant un ou plusieurs groupes (A) pour la préparation et le débit de café express et un ou plusieurs groupes (B) pour la production et le débit d'eau chaude et de vapeur d'eau.

4. Ensemble suivant la revendication 3, caractérisé en ce que chaque unité modulaire (37, 38) comprend une structure de support qui supporte les éléments des groupes autonomes (A, B) respectifs et un corps (40) qui enveloppe la structure de support, des côtés (40a) du corps (40) étant conçus de manière à pouvoir être facilement démontés de la structure de support (39) pour permettre une jonction entre les structures de support (39) de deux unités modulaires adjacentes (37, 38).

5. Ensemble suivant la revendication 4, caractérisé en ce que chacun des deux côtés (40a) du corps de chaque unité modulaire (37, 38) est constitué d'un panneau pourvu sur sa surface interne de saillies en forme de crochets (41) qui s'engagent dans des ouvertures correspondantes (42) dans les parois latérales de la structure de support (39) de chaque unité modulaire.

6. Ensemble suivant la revendication 4, caractérisé en ce que chacune des parois latérales de la structure de support (39) de chaque unité modulaire (37, 38) est pourvue d'ouvertures (43) permettant un assemblage au moyen de boulons (44) entre des structures de support (39) de deux unités modulaires (38, 39) adjacentes l'une à l'autre.

EP 0 236 549 B1

*FIG.1*

*FIG.2*

FIG.3

FIG.5

FIG.4

FIG.6